# EUROPEAN PATENT APPLICATION

(11) **EP 0 570 901 A2**
(43) Date of publication of application: **24.11.1993**
(21) Application number: 93108055.0
(22) Date of filing: 18.05.1993
(51) Int. Cl.: B23K 9/00, B23K 9/09, B23K 9/10, B23K 9/167

(54) **Control system for alternating current tig welder**

(30) Priority: 18.05.1992 US 884157
(71) Applicant: THE LINCOLN ELECTRIC COMPANY, Cleveland, Ohio 44117-1199 (US)
(72) Inventor: Cline, Guy G., Chardon, Ohio 44024 (US); Mikitin, Gary A., Mayfield Heights, Ohio 44124 (US)
(74) Representative: Schumacher, Horst, Dr. Dipl.-Phys.

(57) **Abstract**

A control system for an A.C. TIG welder having a welding current alternating between a first polarity defining a clean current portion and a second polarity defining a weld current portion, with successive clean and weld current portions constituting a current cycle. The welder has provision to adjust the duration of the clean portion of said welding current cycle. The control system comprises storing a predetermined group of duration signals each indicative of a clean portion duration with each duration signal corresponding to a given value of the welding current; sensing the value of the welding current; selecting the clean portion duration signal corresponding to the sensed value of the current; and, adjusting the duration for the clean current portion of said current cycle to the duration indicated by the stored clean portion duration signal corresponding to the sensed value of the welding current.

## Description

The present invention relates to arc welding and more particularly to a control system for an A.C. TIG welder of the type operated in accordance with the process parameter such as output current, and having an output welding current alternating between a first polarity defining a clean current portion and a second polarity defining a weld current portion.

### INCORPORATION BY REFERENCE

The present invention relates to a control system and method for controlling the clean cycle in an A.C. TIG welder of the type having a generally square wave current output at least above a threshold output current level. Such square wave A.C. TIG welders are well known in the field and are described in various prior art patents. As background information and to preclude the necessity for incorporating well known technology in this application, various selected prior art patents are incorporated by reference herein.

Correy 3,068,352 is an early patent teaching the concept of a square wave A.C. output current for TIG welding wherein the clean portion of the alternating current cycle, indicated to be the positive polarity, is controlled to have a time duration only as long as necessary for effecting the cleaning of the workpiece being welded by the TIG welding process. This process is used for TIG welding of aluminum in the A.C. mode. Correy provides square wave A.C. output current by switching a constant D.C. current from a rectifier between a positive polarity and a negative polarity through the use of switching devices, such as SCRs. In this manner, the square wave output is switched between a positive polarity clean current portion and a negative polarity weld current portion. Either of these current portions can be independently adjusted in duration or length of time by selecting the switching points of the switching unit. TIG welding of aluminum by a method that can adjust the duration of the clean cycle and/or the weld cycle in an alternating current mode of operation by use of an inverter power supply is taught by this Correy patent.

Normando 3,382,345 is incorporated by reference herein as illustrating a power supply of the inverter type which produces a square wave A.C. output current which has adjustable positive polarity current clean portions and negative polarity current weld portions to perform the method taught in the Correy patent. Risberg 4,038,515 is incorporated herein by reference as illustrating a full bridge employing SCRs to convert a single phase input voltage into a square wave A.C. welding current wherein the time duration of the clean portion of the total cycle can be adjusted by changing the firing points or gating times or phases of the SCRs. These SCRs form two separate current paths through a common current stabilizing choke. The clean portion and weld portion in this prior art patent, when operated in a square wave mode above a given current, are summed together to equal 360 electrical degrees. Consequently, the power supply illustrated in Risberg 4,038,515 is not as precisely adjustable as the Correy and Normando power supplies, but the welder does produce a generally square wave current output above a certain current level. The welder has a clean current portion that is adjustable by selective firing of the SCRs controlling opposite polarity current paths.

Winn 4,371,776 discloses a square wave A.C. TIG welder employing forced commutating SCRs in a power circuit of the type including two SCRs or a four SCR bridge, as shown in Risberg 4,038,515. Winn and Risberg teach technology which allows adjustment of the clean portion of the total welding cycle in A.C. TIG welding of aluminum. The adjustment, however, is limited to the period of the single phase input line current.

Correy and Normando teach the method and apparatus for square wave A.C. TIG welding of aluminum, wherein the clean cycle portion and weld cycle portion are both adjustable to accomplish the desired relationship between the clean cycle portion and weld cycle portion in a TIG welding operation, primarily used for welding aluminum.

Risberg 4,435,632 employs the concept of a cycloconverter where several SCRs create an A.C. welding current and allow adjustment of the clean cycle portion of the A.C. output of the TIG welder. This TIG welder employs a three phase input as does the preferred embodiment of Correy and Normando. The output current is a square wave and has an adjustable clean portion and weld portion. This second Risberg patent is also incorporated by reference.

Several patents incorporated by reference herein are employed to show that the actual power circuit for a square wave A.C. TIG welder can take a variety of forms while still allowing adjustment of the clean cycle portion as taught by the Correy patent. The input voltage can be either single phase or three phase. The basic power circuit can be an inverter or a controlled bridge, as shown in Winn and Risberg '515. Details of the operation of these power circuits need not be repeated for an understanding of the present invention. The invention is applicable to a variety of known power circuits capable of producing A.C. welding current, normally square wave, for TIG welding of aluminum and having the further capability of adjusting the clean cycle duration. In some instances the clean cycle portion and weld cycle portion of the total A.C. output current cycle is equal to 360 electrical degrees; therefore, when the clean cycle portion is adjusted, the weld cycle portion is changed accordingly. In this instance, the relationship between the clean cycle and the weld cycle can be indicated as a ratio or percentage. Consequently, adjustment of the clean cycle portion can either be an independent operation as shown in Correy, Normando and Risberg 4,435,632 or an adjustment coordinated with the weld cycle as shown in Winn and Risberg 4,038,515.

Many other arrangements can be provided for creating square wave A.C. welding current having an adjustable clean duration for the polarity used to clean aluminum during an A.C. TIG welding process. In some instances, two separate power supplies can be employed and are switched alternately across the electrode and workpiece by a switching arrangement such as shown in Barhorst 3,999,034 and Barhorst 4,180,720. The power circuit used in the preferred embodiment of the present invention is shown in Lepp 3,845,380 and Risberg 4,038,515.

All of these prior art patents are background power supplies having power circuits which can employ the present invention in its broadest sense. These different power circuits need not be explained in detail as to the switching networks, the type of electrical input or the manner of controlling the duration of the clean cycle in the A.C. output current for TIG welding of aluminum. Such concepts are well known.

### BACKGROUND OF INVENTION

The present invention relates to a control system and method of operating an A.C. TIG welder of the type used for TIG welding of aluminum in accordance with certain process parameters such as output welding current level. Such welder has an output welding current alternating between a first polarity defining a clean current portion and a second polarity defining a weld current portion. The invention is preferably employed in an A.C. welder where the power circuit for creating the alternating current is a full bridge having a choke across the D.C. terminals and connected in series with the secondary of a single phase input transformer and the arc gap between the electrode and workpiece. The invention will be described with particular reference to this particular type of power circuit; however, it is fully appreciated that the invention has much broader applications and may be used with power circuits of various types as set forth in the background technology incorporated by reference. The power circuit can be a full bridge in series with a secondary of a single phase transformer, an inverter having a D.C. link, a pulse width modulated current source for creating a multiplicity of output current pulses at high frequency to create the A.C. welding current or two separate and distinct power supplies switched across the arc gap between the electrode and workpiece. The two power supplies can have different current levels. In the Correy type unit using a D.C. link, the D.C. power supply is normally regulated at a constant current; consequently, the same current amplitude flows during the clean portion or pulse and the weld portion or pulse. The invention automatically adjusts the clean portion and/or the relationship of the clean portion to the weld portion. This can be done by adjusting the duration of the clean cycle. It can equivalently be done by adjusting the current amplitude in the clean cycle. These adjustments control automatically the amount of heat during the clean cycle. This can also be done by an energy adjustment. Current level means the amount of current used to heat the arc area. This is measured by a RMS type sensor which must rectify the A.C. to measure current level as a heating parameter. When a constant current power circuit is used, which is generally the situation with square wave A.C. welding, the current level is the amplitude used in both polarities.

To employ a full bridge power circuit with a D.C. choke, as shown in Lepp 3,845,380, Risberg 4,038,515 and Winn 4,371,776, it is known technology to employ a microprocessor for creating the firing points of the SCRs in the two parallel, opposite polarity conductive paths so that the clean cycle and weld cycle have a desired relationship generally referred to as a "balance" between the clean portion of the A.C. welding cycle and the weld portion or penetration portion of the A.C. current cycle. By adjusting an input voltage to the microprocessor, the balance of the clean to weld portion is adjustable in a manner to change the clean cycle with respect to the weld or penetration cycle. This manually adjusts the desired balance of the output A.C. welding current for TIG welding of aluminum. The present invention is particularly applicable for use in a microprocessor controlled A.C. TIG welder. The preferred TIG welder is the type having a controllable bridge for controlling the current flow from the secondary of a single phase transformer. The invention will be described with particular reference to such power circuit with a microprocessor control of the A.C. TIG welder; however, it is appreciated that the invention has much broader applications and may be used in other types of A.C. TIG welders having various arrangements for controlling the clean portion of the cycle independent of or dependent upon the weld portion of the cycle. Of course, the welder can have operating modes other than a selectable A.C. TIG welding mode, such as D.C. TIG, stick and pulsed welding.

One of the more commercially successful A.C. TIG welders with an adjustable balance control to change the clean portion of the A.C. output welding current is the Square Wave TIG 350 manufactured by The Lincoln Electric Company of Cleveland, Ohio. This welder employs a microprocessor for controlling the firing points or gating times of SCRs of a full bridge, single phase power circuit as shown in Risberg 4,038,515, Winn 4,371,776 or Lepp 3,845,380. In this existing commercial unit, the firing points are controlled by a selector switch which is manually movable between several positions to create a desired ratio between the clean portion of the A.C. output current and the weld or penetration portion of the A.C. output current. In this manner, the duration of the clean cycle can be controlled manually by the selector switch. The microprocessor for controlling this welder in the A.C. TIG welding mode calculates the firing points for shifting between the weld portion and the clean portion and then between the clean portion and the weld portion of the output current during alternate half cycles of the input single phase voltage. The firing points of the respective SCRs are either advanced or retarded to control output current or dependently moved in unison toward or away from each other, in a time sense, to control the relative relationship between the clean portion and the weld portion of the total A.C. output cycle. To accomplish this latter dependent adjustment, the microprocessor determines the desired balance by the position of the balance selector switch. The switch or knob position is converted into a selected digital number. The number between 0-2000 is subtracted from the firing point of one set of SCRs and added to the firing point of the other set of SCRs. In this manner, the balance is changed as a direct relationship by dependently moving the firing points either toward each other or away from other, in the time sense, through the digital manipulation of subtracting a fixed number manually selected by a knob and indicative of a desired balance condition from one firing point time position and adding the same manually selected number to the other firing point time position. Both of these firing points (with the balance number BN added or subtracted) are retarded or advanced according to a standard current regulator subroutine of the microprocessor. The welding current level is measured by either a shunt or Hall Effect device, read as a voltage, converted into a digital number and compared to a digital number representative of the selected desired output current level for the A.C. output welding current. The difference between the digital number in the microprocessor indicative of the selected desired output welding current and the sensed actual current from the welding operation determines the number which is employed for advancing or retarding the firing point and controlled by the software of the microprocessor. The attached software entitled PRIOR ART is used in the commercial unit to select the respective firing points. The present invention is implemented in this software architecture.

Manual selection of the balance number could also be accomplished by moving only the firing point at which the output welding current shifts from the clean current portion or pulse to the weld current portion or pulse. By this procedure, which could be done digitally in a microprocessor or with logic gates, the output current level would be changed. When the current changes, the microprocessor would employ the subroutine of the current regulator that uses the sensed actual current from a feedback transducer read as a number indicative of the desired output weld current level. Both firing points of the positive and negative voltage half cycles are then advanced or retarded together to obtain the desired output current level. In this manner, in a selected balance, one firing point is first adjusted. This digitally affects a single current reversal. This current reversal then affects the output current level which, through the current regulator subroutine of the microprocessor program or software, changes both firing points in unison to readjust the output current level to the desired current level. In this manner, the clean cycle is changed in duration. The moving of only one set of firing points changes the current in one half cycle of the input voltage. The current in the other half cycle does not change. To obtain no current change both firing points must be moved. In both types of digital controls, i.e. the preferred movement of the firing points in unison or the alternative of moving one point and allowing the current regulator to adjust both firing points, the clean cycle is being changed. The selectable balance concept changes the relationship between the clean cycle and the weld cycle. This controls the duration of the clean cycle during the actual welding operation.

These prior art arrangements using either digital control of the clean cycle (by a logic network or software) or analog control of the clean cycle, present a basic difficulty. An operator who is not experienced in TIG welding of aluminum may select a clean cycle duration for balance which is not the most efficient balance setting from a purely welding standpoint. In addition, one welder may select the clean duration or "balance" of the welding operation to a particular value whereas the next welder may change the selected value. In addition, even the same operator may use different clean cycle durations or "balances" for the same operation from time to time. In other words, by manually adjusting or selecting the clean cycle portion or "balance", either in an analog control circuit or a digital control circuit, the desired clean cycle duration or balance is not be used consistently.

### THE INVENTION

The present invention relates to an improved control system for an A.C. TIG welder operated in accordance with the process parameter, such as the level of output welding current, and creating an output welding current alternating between a first polarity clean cycle and a second polarity weld cycle, wherein the duration of the clean cycle or clean current portion, known as "balance", is automatically selected according to the sensed parameter being monitored. When this sensed parameter is output welding current, the wave balance or clean duration is automatically adjusted according to the selected output current of the A.C. TIG welder. As the output current is changed, the balance is set in accordance with a preselected pattern. When this pattern indicates a balance change, such balance change is automatically implemented. The invention is accomplished, in the preferred embodiment, by providing a map, table, memory device or area or an analog curve representing the desired relationship between the output welding current and the balance which is expressed as a digital number BN in a microprocessor controlled A.C. TIG welder, such as the Square Wave TIG 350 manufactured by The Lincoln Electric Company of Cleveland, Ohio.

As the selected output current is changed to a given current level, a preselected digital number is selected. This number is subtracted from and added to the firing point number of the microprocessor control system. The balance is, thus, automatically selected in accordance with the selected output current for any given welding operation. The term clean "duration" means the time of the clean cycle in a total A.C. welding cycle where the total current or welding cycle includes both a clean cycle or portion and a weld or penetration cycle or portion. Balance is the relationship between these two opposite polarity current portions. Thus, by selecting the balance, the clean cycle or pulse duration is controlled with respect to the weld cycle duration. The amplitude of the welding current flowing during the clean portion of the welding cycle can be adjusted. In either situation, the energy during the clean portion is controlled automatically as a function of a welding parameter, preferably the level (RMS) of the output weld current. This invention is particularly applicable in an A.C. TIG welder of the type wherein the clean cycle or current portion and the weld cycle or current portion total 360 electrical degrees, although it can be used in any A.C. TIG welder having a mechanism for selecting the balance, i.e. clean duration, of the output current cycle.

By employing the present invention, the microprocessor controlled A.C. TIG welder merely needs to create a binary number indicative of the desired amount of balance for a particular output current being employed and then using this number to control the balance of the output weld current by changing the instances of current polarity reversals. In accordance with the preferred embodiment, this duration adjustment is made by subtracting the automatically created number from the firing position in one half cycle of input voltage and adding the same number to the firing position in the other half cycle of input voltage. The adding and subtracting process can be algebraical so that the reverse operation can occur when the number is a negative value to move the firing points in unison toward or away from each other, in a time sense, for adjusting the balance between the clean and weld portion of the output welding current. Adjusting the clean cycle can be accomplished by adding or subtracting the automatically generated balance number to one firing point and then adjusting both firing points in unison, i.e. the firing point in the negative voltage half cycle and the firing point in the positive voltage half cycle are advanced or retracted so that both firing points are moved to adjust the output current. This is a current regulating concept that is needed to maintain constant current if the balance procedure shifts only one firing point location. Both of these digital arrangements will change the balance of output current, i.e. the duration of the clean cycle with respect to the weld cycle. If the weld and clean cycles are not interrelated as in Risberg 4,038,515, then only the clean cycle duration need be adjusted. This is the situation in Correy and Normando. Both adjustment concepts are capable of changing the duration of the clean current half cycle in the A.C. output welding current, dependent upon the adjusted or selected output current for the welding operation being performed. Consequently, the output welding current is selected for a given operation and the clean duration is automatically adjusted in accordance with any convenient digital schemes, which schemes can be employed to change the clean cycle duration in the output D.C. TIG welding current of the type used for aluminum.

In accordance with the present invention, there is provided a control system for an A.C. TIG welder operated in accordance with certain process parameters, such as welding current. Such welder can also be employed for other welding operations not involved in the present invention, such as stick welding, D.C. TIG welding and other welding processes. The A.C. TIG welder employing the present invention has an output welding current alternating between a first polarity defining a clean current portion and a second polarity defining a weld current portion with successive clean and weld current portions constituting a current cycle. "Successive" means that the clean cycle is used to clean the metal and then the weld or penetration cycle directs heat to the workpiece. These cycles are repeated during a welding operation. A clean cycle can be followed by more than one weld cycle or pulse in some of the welders. The invention automatically selects the clean duration or, in an equivalent concept, the clean cycle current amplitude.

Preferably, the power circuit of the TIG welder of the present invention produces a square wave output welding current. The welder includes means for adjusting the duration of the clean portion of the welding current cycle, either in accordance with, or separate from, the weld current cycle duration of the total output welding current cycle. The control system of the present invention, in one aspect, comprises means for storing a predetermined group of duration signals each indicative of a clean portion duration, with each duration signal corresponding to a given value of a preselected one or more of the process parameters, such as the level of the output welding current; sensing means for sensing the value of the preselected one or more of the process parameters; means for selecting the clean portion duration signal corresponding to the sensed value; and, means for shifting the duration of the clean cycle current portion of the total welding current cycle to the specific duration indicated by the stored clean portion duration signal corresponding to the sensed value. This invention is primarily implemented by a software program wherein a relationship is established between a preselected parameter, such as output current level, and the balance which is to be selected for a particular output current. As the welder is manually changed to select a welding current level, the balance of the A.C. output current is automatically selected. The welding process parameter could be the aluminum alloy to be processed or a particular shielding gas to be used. For instance, if the operator should select a predetermined product or alloy to be welded, the present invention automatically selects the desired balance for the A.C. output welding current. The balance is essentially the duration of the clean pulse as it relates to the duration of the weld or penetration pulse in the total A.C. current cycle for the TIG welding current. These concepts can be expressed in the term of balance or clean time duration; however, these concepts are directed to the feature of controlling the amount of time during the total welding cycle in which the clean portion of the alternating output current allows current flow in the direction for cleaning the aluminum. Normally the duration of the clean cycle is a percentage of the total cycle since the total cycle involves 360 electrical degrees.

In accordance with another aspect of the present invention, the duration of the clean portion of the total cycle and the duration of the weld portion of the total cycle equals 360 electrical degrees. This is the situation when the A.C. TIG welder is operated above a threshold current. In the Square Wave TIG 350 manufactured by The Lincoln Electric Company the threshold current is approximately 60 amperes. Below this current level, the output current is not a square wave and the actual current flow does not occur over the total 360 electrical degrees. However, this aspect of the present invention is defined as being capable of operating above the threshold in the square wave mode wherein the output current includes 360 electrical degrees formed by the clean duration and the weld duration of the alternating output welding current. Irrespective of this, the invention automatically selects the duration of the clean cycle in accordance with the output current level or another parameter.

In accordance with another aspect of the invention, the output current is substantially square wave and fluctuates between either the clean polarity or the weld polarity for TIG welding of aluminum.

In accordance with yet another aspect of the present invention, the parameter which is used to automatically select the balance or clean duration for the welding cycle is the level of the output current, which can be detected either as the manually selected output current, read directly from the manual input to the welder, or the actual output current read from the normal feedback current employed in the current regulator of the welder. The present invention anticipates the use of a current regulator, preferably as a subroutine wherein a feedback signal indicative of actual output current is digitized and compared to the desired current level, which is also digitized in the microprocessor. The difference between the two numbers is employed for shifting the firing points in the negative and positive voltage half cycles in unison to either retard or advance the firing points to decrease or increase the output current, respectively. Such current regulator is standard practice and is illustrated in an analog fashion in Risberg 4,038,515. The firing points for the SCRs of the bridge for both the positive and negative half cycles of the input voltage are numbers in the software program employed for operating the preferred embodiment of the invention. These numbers are either decreased or increased in unison for the purposes of current control.

In accordance with another aspect of the invention, one of the firing point numbers can be either increased or decreased to change the balance of the output current. Thereafter, the current regulating subroutine of the control system is employed for moving both firing point numbers in unison to adjust the output current level. Both of these digital concepts will adjust the clean duration or adjust the balance in accordance with the process parameters, such as the output current level. The term "level" means the amount of energy being directed from the input power supply to the welding operation. As discussed before, the A.C. current is rectified and then measured to determine current level. When a constant current in both polarities is used, the level is the value of the constant current.

In accordance with another aspect of the present invention there is provided a system which further includes means for setting the desired value of the output welding current and the sensing means used in the invention includes means for sensing the set desired output current value or level for the purpose of automatically selecting the desired balance, i.e. the duration of the clean portion of the weld cycle.

In accordance with still a further aspect of the invention, the relationship between the output current, or other process parameter, and the balance or clean duration can be modified to conform to a different relationship between these variables. The shift is by manually changing the predetermined group of stored durations to use a second, i.e. different, group of duration signals. In this manner, an operator may manually adjust the relationship between the output current and the balance by selecting one of two or more groups of stored signals. The desired automatic control relationship between output current and wave balance can be changed for various alloys, various shielding gases or various work products being welded. In accordance with this aspect of the invention, the particular relationship between output current or some other process parameter, and the balance being selected by the control system is changed by a further process parameter, such as the alloy being welded, the process being performed or the shielding gas of the welding operation, to name the more obvious reasons for changing the relationship between balance and output current.

Still a further aspect of the present invention is provision of a control system, as defined above, wherein the total output current cycle is maintained at a fixed duration, such as 360 electrical degrees, so that the duration of the weld portion is inversely adjusted with respect to the adjustment of the clean cycle duration. Consequently, when a balance is automatically selected, the clean portion is selected and this inversely affects the weld portion.

In accordance with yet another aspect of the present invention there is provided a method of operating an A.C. TIG welder having a generally square wave output welding current where the current has a level and alternates between a first polarity clean current portion and a second polarity weld current portion. The clean portion has a given time duration. The inventive method comprises the steps of creating a signal indicative of the level of the output welding current and adjusting the clean portion duration in accordance with the created signal whereby the clean portion duration is selected as a relationship of the output current level.

In accordance with still a further aspect of the invention, there is provided the method, as defined above, which method is performed with an inverter, a power circuit that switches a D.C. power supply alternately in opposite polarities across the arc, a power circuit for converting an A.C. single phase input into an A.C. welding current, or a pulse width modulated power circuit.

Another aspect of the present invention is the provision of an A.C. TIG welder including means for creating a generally square wave output welding current having a current level and alternating between a first polarity clean current portion and a second polarity weld current portion, wherein the clean portion has a given time duration and further comprising means for creating a signal indicative of the level of the welding current and means for adjusting the time duration of the clean portion in accordance with the created signal whereby the clean portion duration is selected as a relationship of the output welding current.

Although the invention has been described as controlling the balance of an A.C. TIG welder, by controlling the duration of the clean current portion as it relates to the weld or penetration portion, the control can equally control clean current amplitude and/or the energy during each successive clean current portion of the output current.

The primary object of the present invention is the provision of a control system and method for an A.C. TIG welder primarily for use in welding of aluminum, which system and method automatically selects the balance of the output current, i.e. clean duration, in accordance with a process parameter, such as the level of output current.

Yet another object of the present invention is the provision of a control system and method, as defined above, which system and method can be implemented easily in an A.C. TIG welder of the square wave type controlled by a microprocessor or digital logic, wherein the alternate firing positions of the switching devices are controlled digitally to produce the desired output welding current and automatically controls the balance of the weld current for A.C. TIG welding of aluminum as a function of a process parameter, such as output current level.

Yet another object of the present invention is the provision of a method for automatically controlling the balance of the output current for an A.C. TIG welder in accordance with a process parameter, such as output current level, which system and method can be economically operated, can be implemented by a microprocessor or other digital device and can be used on any A.C. TIG welder which has both an arrangement for manually selecting the wave balance of the output A.C. current, as well as, the output current level.

These and other objects and advantages will become apparent from the following description taken together with the accompanying drawings in which:

### BRIEF DESCRIPTION OF DRAWINGS

FIGURE 1 is a schematic wiring diagram of the A.C. TIG welder now on the market and illustrated in the prior art patents such as in Risberg 4,038,515;
FIGURE 2 is a schematic layout of the balance control knob or selector switch employed in the prior microprocessor controlled A.C. TIG welder manufactured by The Lincoln Electric Company under the designation Square Wave TIG 350 with an added select position to be used in practicing the present invention;
FIGURE 3 is a block diagram showing the logic scheme employed in the preferred embodiment of the present invention for controlling the balance of the output welding current, which operations are performed by the software in the microprocessor based welder used in the preferred embodiment of the present invention;
FIGURE 4 is a schematic graph of the input voltage sine wave of the preferred embodiment of the present invention together with the digital arrangement for controlling the clean duration or balance of the output current as used in the preferred embodiment of the present invention;
FIGURE 5 is a logic diagram of an implementation to be used in the present invention when employing a microprocessor controlled A.C. TIG welder for aluminum;
FIGURE 6 is a series of block diagrams illustrating the numerical subtraction and addition concept employed in the preferred embodiment of the present invention for changing the balance of the output current using output of the diagram of FIGURE 5 in accordance with the present invention;
FIGURE 7 is a block diagram explaining one aspect of the present invention;
FIGURE 8 is a graph showing the numerical relationship between the output current level, or other process parameter, and the balance to be automatically adjusted for the output welding current;
FIGURE 9 is a graph similar to FIGURE 8 wherein the balance setting is adjusted in steps as the output current is varied;
FIGURE 10 is a modification of the preferred embodiment of the present invention wherein the actual output current is displayed visually before being employed to automatically select the balance of the output weld current;
FIGURE 11 is a block diagram illustrating a further modification of the preferred embodiment of the present invention;
FIGURE 12 is a graph illustrating the operating characteristics of the modification shown in FIGURE 11;
FIGURE 13 is a block diagram showing a further modification of the preferred embodiment of the present invention;
FIGURE 14 is an additional block diagram showing still further modifications of the preferred embodiment of the present invention;
FIGURE 15 is a graph showing the relationship between the balance and the expired time of the welding cycle used in accordance with the modification of the preferred embodiment of the present invention shown in FIGURE 14;
FIGURE 16 is a flow chart of a logic implementation of the preferred embodiment of the invention;
FIGURE 17 is a flow chart showing a modification of the logic diagram of FIGURE 16; and,
FIGURE 18 is a flow chart showing a further modification of the logic diagram of FIGURE 16.

### GENERAL DESCRIPTION OF INVENTION

In A.C. TIG welding it has been known for many years that in welding aluminum it is beneficial to have the capability to alter the energy expended in the electrode positive polarity portion of the output current, which is generally referred to as the clean portion, when compared to the energy expended in the electrode negative polarity, generally referred to as the weld or penetration portion of the output welding current for the TIG welder. Some percentage of the total energy in each complete cycle is expended in the electrode positive polarity to provide the necessary cleaning of the aluminum alloy being welded. It is desirable to use only the amount of energy in the clean portion of the output current cycle which is needed for the cleaning operation, since there are undesirable characteristics of increased heating of the tungsten electrode and decreased penetration into the base metal or workpiece during the electrode positive portion of the alternating output current. In the past, numerous arrangements have been made for the purpose of achieving a control of the percentage of energy expended in the electrode positive and electrode negative half cycles of the output current which is often referred to as the balance or balance of the output current. The balance of the output current is the relationship between the time the output current is electrode positive and the time or duration that it is electrode negative. The balance of the output current when using a square wave power circuit, such as shown in Lepp 3,845,380, is a means for controlling the duration of the electrode positive half cycle which is referred to as the clean portion of the output current. In other circuits such as shown in Correy, Normando and Barhorst, the electrode positive portion of the output current is controlled to obtain the desired workpiece cleaning. The electrode negative portion is also controlled to obtain the desired welding during each alternation or complete cycle of the output current. In either instance, the control of the balance is to accomplish the desired clean duration during an alternation of the output current. Controls in the past have provided a fixed balance or fixed clean portion of the output alternating current by a manual setting or selector, which maintains this fixed balance or clean duration regardless of the output current. In such prior control systems, it was desirable to alter the balance manually at the beginning of the weld where certain applications would require a reduced or tapered output current having a different balance requirement. Consequently, the balance control had to be manually manipulated before any particular balance of the output current either during a welding cycle or during a total weld cycle. In addition, due to the complexity of the control systems on prior A.C. TIG welders for aluminum, the operator had difficulty in determining the particular manually adjusted balance setting which was technically correct even when understanding that the balance should be adjusted in the various portions of the cycle or for a given welding operation. The difficulties associated with the previous balance control systems and method for A.C. TIG welding are alleviated by employing a TIG welder having the control system of the present invention wherein the A.C. TIG welder has an output control system which incorporates the setting of a predetermined amount of balance dependent upon the output current level of the welder. Such operation can be accomplished by including in the software of a microprocessor controlled A.C. TIG welder a map, a program memory by a memory device or software storage, or table of calculated optional balance as a function of various output current levels at which a welder is to be operated. The table or relationship can be in a memory location or ROM, etc. The relationship or function between the output current level and the balance necessary for cleaning can vary from output current to output current, which variation is stored in the microprocessor memory area of a prior art device, such as the existing microprocessor controlled TIG welder. The relationship between the output current and the balance is mapped or provided by a mathematical equation, table or memory device or location and is preferably incorporated in the microprocessor software for controlling the amount of balance to select the desired clean duration of the alternating current output in accordance with an operating parameter of the welder, such as the output current level. Of course, this control scheme and system can be performed using conventional analog circuitry, as used in the prior art, such as in the Square Wave TIG 300 manufactured by The Lincoln Electric Company and in the Syncrowave 350 manufactured by Miller Electric Manufacturing Company of Appleton, Wisconsin. The scheme can be used in a digital control using an EPROM for selecting the proper balance for a selected output current.

In accordance with another aspect of the preferred embodiment of the invention, the control system or method employs more than one relationship between the welding output current and the desired balance to be used by an A.C. TIG welder. The relationship is varied by a select control, such as a selector switch or potentiometer on the welder so that the operator can select the desired relationship for any particular workpiece, shielding gas, process time, welding current or other process parameters. Consequently a family of curves or relationships can be employed for selecting the desired balance for specific output currents automatically by selection of the output current.

### PREFERRED EMBODIMENT

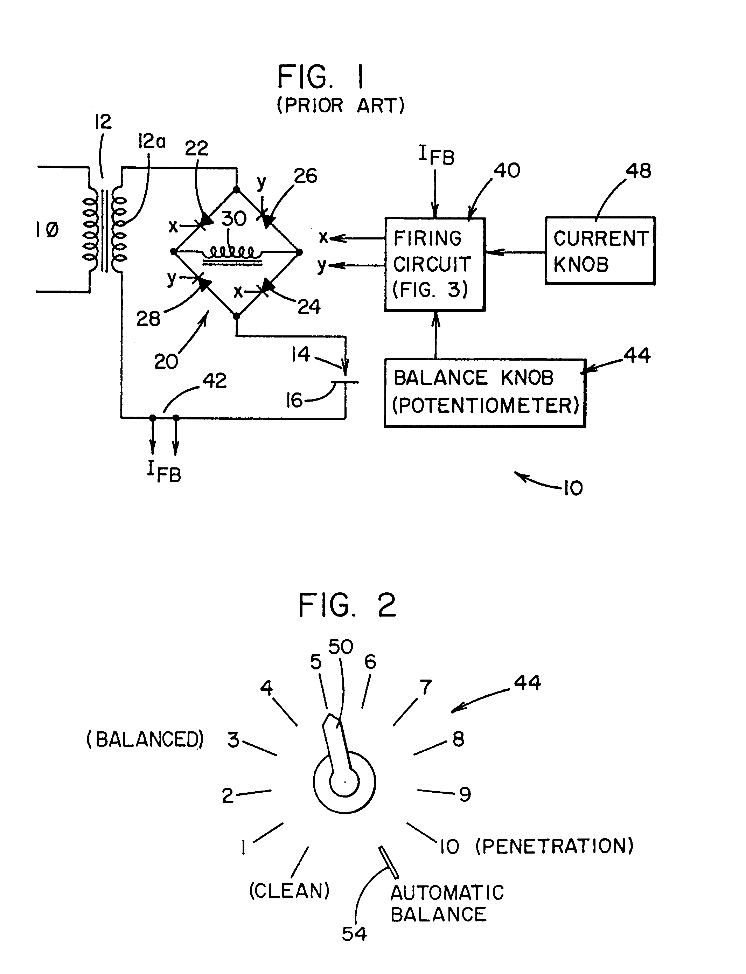

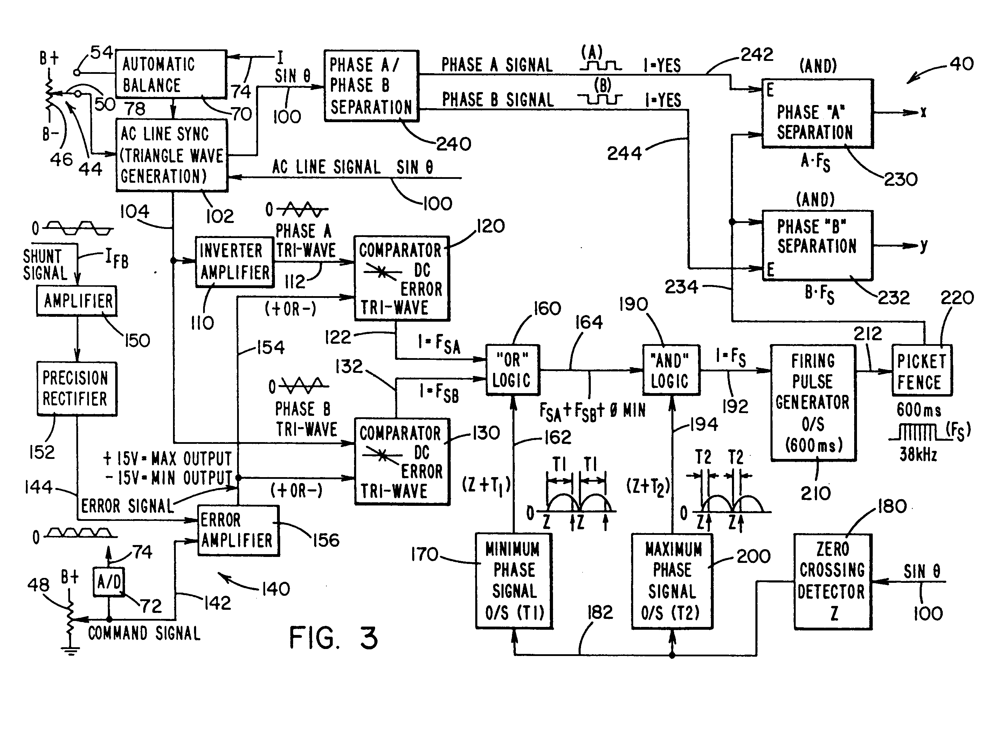

Referring now to the drawings wherein the showings are for the purpose of illustrating a preferred embodiment for accomplishing the present invention and not for the purpose of limiting same, FIGURE 1 shows an A.C. TIG welder 10 constructed in accordance with the prior art such as a product sold by The Lincoln Electric Company and identified as the Square Wave TIG 350. This commercial device employs a single phase input from transformer 12 to direct an alternating welding current across non-consumable tungsten electrode 14 and workpiece 16. In accordance with standard technology, above a given threshold current, TIG welder 10 produces a square wave welding current by way of a standard power circuit including a bridge 20 as shown in Lepp 3,845,380, with a first set of switch means or SCRs 22, 24 and a second set of switch means or SCRs 26, 28. A stabilizing choke 30 in practice approximately 0.50 mH is connected across the D.C. terminals of bridge 20 in accordance with known practice. The respective pairs of switching means or gates are rendered conductive by gating signals from lines x, y, respectively. When the voltage at the secondary 12a of transformer 12 is in the positive half cycle and a gating pulse or trigger pulse appears in line x, current flows through SCRs 22, 24 and across the gap between electrode 14 and workpiece 16. During the next half cycle, a firing pulse or trigger pulse is created in line y to cause conduction of SCRs 26, 28. Choke 30, which is a D.C. stabilizing choke, is large enough to maintain a nearly square output current at least above a certain threshold output current, such as 30-60 amperes. In accordance with standard practice, a firing circuit 40, shown in detail in FIGURE 3 with a modification in accordance with the present invention incorporated therein, creates firing pulses alternately in lines x, y. The spacing of these firing pulses with respect to the input line voltage wave form determines the alternation between the positive polarity clean cycle and the negative polarity weld cycle. The firing point spacing determines the duration of both the clean cycle and the weld cycle. The firing circuit 40 can have a variety of designs and is, in the prior art, implemented by a microprocessor in accordance with the logic diagram set forth in FIGURE 3. Other analog concepts which can be digitized and implemented by microprocessor are shown in Risberg 4,038,515 and Winn 4,371,776. Other power circuits can be employed such as inverters and pulse width modulated power circuits. In addition, the invention can be implemented by analog technology as well as digital technology; however, digital technology is preferred. Digital technology processed by software is used in the preferred embodiment of the present invention and is used in the prior art to which the present invention is more specifically directed.

In accordance with standard technology, a shunt or other current pick up 42 is employed to create a feedback signal I_{FB} which is directed to the firing circuit 40 for use in a standard current regulator, implemented by discrete components or by a software program, to move the firing points in lines x, y in unison to retard or advance the firing points for adjusting the output current to a value corresponding to the level of current set or selected by a selector 44 which is a manually operated current knob movable between finite selection positions 1-10. Thus, by selecting the output current through adjustment of a selector switch 44 the feedback voltage signal from shunt 42 can be employed for maintaining the desired output current of A.C. TIG welder 10 by advancing or retarding the trigger pulses or gating pulses on lines x, y. This is standard practice and can be performed in an analog fashion as shown in Risberg 4,038,515 or as software in a microprocessor as done in commercial units. To change the duration of the clean portion of the welding cycle, a potentiometer 46, shown in FIGURE 3, is employed. As knob 44 is moved, potentiometer 46 is shifted. The balance of the output current is changed. Balance indicates the amount of clean relative to the amount of weld or penetration current. This may be expressed in a percentage or it can be indicated to be the adjustment of the duration of the clean cycle since the clean cycle and weld cycle in the preferred embodiment as shown in FIGURE 1 totals 360 electrical degrees. In the prior art as illustrated in FIGURE 1, the balance is manually selected by adjusting knob 44 which creates a voltage at potentiometer 46 which is digitized and inputted to the microprocessor in accordance with the logic or function diagram of FIGURE 3.

In accordance with the present invention, the balance of the output current can be automatically adjusted according to the input current set by an operator at potentiometer 48. This automatic control is illustrated in FIGURE 2 wherein knob 44 including a pointer 50 is moved selectively to the various numerals 1-10. These positions are the same as the prior art when pointer 50 is moved to a given location 1-10. The balance or unbalance is a fixed value in the form of a number representing the adjusted position of potentiometer 46 in FIGURE 3. The setting of knob 44 is the same as potentiometer 46 in FIGURE 3 through the first ten selected positions. The position of the pointer 50 selects a number indicative of a fixed balance number that is inputted into a microprocessor for the purposes of holding the fixed balance during operation of the microprocessor. Knob 44 includes an additional stop or location 54 where an automatic balance feature is manually selected. When pointer 50 is moved to the indicia or location 54, shown in FIGURE 2, the present invention is implemented. The balance of the output current is automatically selected according to a process parameter of the welding operation. In practice, the process parameter is the output current level as selected by potentiometer 48 shown in FIGURES 1 and 3. This current selection is a reading of current potentiometer or selector 48 shown in FIGURE 3. The current signal is digitized by converter 72 to give a signal in line 74. Consequently, when A.C. TIG welder 10 includes the present invention, knob 44 is moved with pointer 50 at indicia 54, the balance of the output current is automatically selected by the device 70 in accordance with the preselected relationship of the current signal in line 74 which corresponds with the output current. This relationship is stored in device 70 and the balance signal, preferably a number, is outputted in line 78. This signal controls the balance in the manner of potentiometer 46, or its digitized version as used in the prior art. This relationship between the current signal on line 74 and balance at line 78 is determined by the setting of the current selector knob. This is schematically represented as potentiometer 48 in FIGURE 3. The sensed actual current at shunt 42 can be used to create the signal 74 of device 70. The automatic adjustment of device 70 can be in accordance with various selected functions or relationships or, indeed, a fixed relationship. In practice, a single relationship of current (signal 74) and balance in line 78 is employed. When the knob 44 is shifted to the automatic balance position 54, the current setting of potentiometer 46 determines the balance automatically without operator intervention by a software or discrete component device 70 shown in FIGURE 3.

The preferred topography for firing circuit 40 to create the firing pulses or gate pulses in lines x, y is schematically illustrated in the block diagram of FIGURE 3. This diagram is functional and it is processed by the software of a microprocessor in the unit known as the Square Wave TIG 350. In the prior art unit, the pointer 50 was in the position shown in FIGURE 3. Thus, the balance was manually fixed as functionally represented by the potentiometer 46. The operation of the prior art uses a program that functions with a fixed balance controlled by movement of pointer 50 giving a number representing a position on potentiometer 46. At each location 1-10 a number is created as if from a potentiometer. This same concept is used in the preferred embodiment of the present invention. The topography can be implemented by discrete components in an analog fashion, as shown, or digitally by a program controlled microprocessor as functionally revealed in FIGURE 3. In the preferred embodiment, a software driven microprocessor is employed; however, the invention can be practiced with discrete components.

The description of the topography in FIGURE 3 is applicable both to the software for a microprocessor or to discrete components. The prior art will be explained briefly and then how the prior art has been modified in accordance with the present invention to implement the subroutine or automatic balance unit 70 as previously discussed.

A sine wave signal is applied to the firing circuit 40 by line 100. This signal is then passed through an amplifier and converted to a triangular wave by generator 102. This wave is applied to output 104. This output signal or wave is a triangular wave synchronized with, but offset 90 from, the sine wave in line 100. The triangular wave is inverted by an inverter amplifier 110 to direct an inverted signal by line 112 to comparator 120. In a like manner, the non-inverted triangular wave in line 104 is directed to the input of comparator 130. The compared input to comparator 120, 130 is the output of the current regulator 140 having a first input from potentiometer or current selector switch 48 for adjusting the desired output current of welder 10. Line 142 provides a voltage proportional to the desired output current. This voltage is converted by converter 72 to create current signal 74. This signal is used only when automatic balance is selected by knob 44. Line 144 provides the feedback current signal from shunt 42 through amplifier 150 and rectifier 152 having an output for controlling the voltage on line 144. An error signal is created in line 154 by error amplifier 156. This error signal is the second input to comparators 120, 130. When the voltage on line 112 decreases to the D.C. level on line 154, an output signal is created in line 122. This is the desired firing point for one half cycle of the input line voltage. In practice this point is a number. In like manner, a signal is created in line 132 within the second firing position for changing the polarity of the output current. Both of these signals 122, 132 are directed to OR gate 160. This gate has a third input 162 from one shot 170. This one shot sets the minimum phase so that a firing pulse will occur at the end of each half cycle of input voltage. One shot 170 is controlled by the zero crossing detector 180, which is synchronized by line 100 containing the sine of the input voltage. A signal in line 182 provides an output signal in line 162 at a time T1 after the zero crossing. Thus, if there is no signal in line 122, 132 at the end of the half cycle, a signal in line 162 will create a logic 1 in output line 164 of gate 160. This output is directed to an AND gate 190 which produces a firing signal in line 192 when a logic 1 appears in line 164 and in line 194 which is the output of a maximum phase angle one shot 200. This one shot creates a signal after the zero crossing at a time T2. Thus, a logic 0 is maintained at the input of gate 190 until time T2. This prevents a firing signal in line 192 until after a preselected time T2. The output of gate 190 is directed to the firing pulse generator 210 which is a one shot having a width of 600 ms. The output of line 212 maintains a logic 1 for that period of time. This output signal in line 212 enables picket fence generator 220 to create a large number of gate or firing pulses at a rate of 38 kHz, during the time a logic 1 appears in line 112. These pulses are then directed to the pulse firing networks 230, 232 through line 234. Thus, a substantial number of firing pulses occur in line 234 whenever there is a convergence of the triangle wave and D.C. level in comparator 120 or comparator 130. To determine whether this signal is applied to output line x or output line y, there is provided a phase separation circuit 240 having outputs 242, 244. These outputs are directed to circuits 230, 232, respectively. A sine wave signal in line 100 is converted into a square wave and directed to a discriminating circuit to create a logic 1 in line 242 during one half cycle of the input voltage and a logic in line 244 at the other half cycle. These logics then steer or enable the output pulses in line x, y at networks 230, 232. These pulses are a series of individual closely spaced pulses for the time determined by one shot device or generator 210. As so far described, this firing circuit concept is employed for the prior art A.C. TIG welder as shown in FIGURE 1. This firing scheme or topography can be implemented by discrete components or can be implemented by a software program utilizing normal software technology. One prior art device has provided the firing pulses in accordance with the analog implementation of the technique shown in FIGURE 3. However, the most pertinent prior art welder has implemented this firing circuit selection scheme of FIGURE 3 by the software of a microprocessor controlled A.C. TIG welder. Attached hereto is a software program for implementing the basic firing circuit scheme as shown in FIGURE 3 by a microprocessor for controlling A.C. TIG welder 10. This program is labeled PRIOR ART.

When the pointer 50 is shifted to the AUTOMATIC BALANCE position 54 by moving knob 44 of FIGURE 2, the line 104 is controlled by the balance amount in line 78 from balance control device 70. The balance corresponds to a given relationship of the signal in line 74. The instantaneous number or voltage on the output line 104 is shifted by a D.C. voltage or number either in a direction adding a D.C. voltage or number or subtracting a D.C. voltage or number. When the voltage in line 104 has a bias, which includes the automatically selected balance, the added or subtracted balance voltage or number changes the spacing between the firing signals in lines 122, 132.

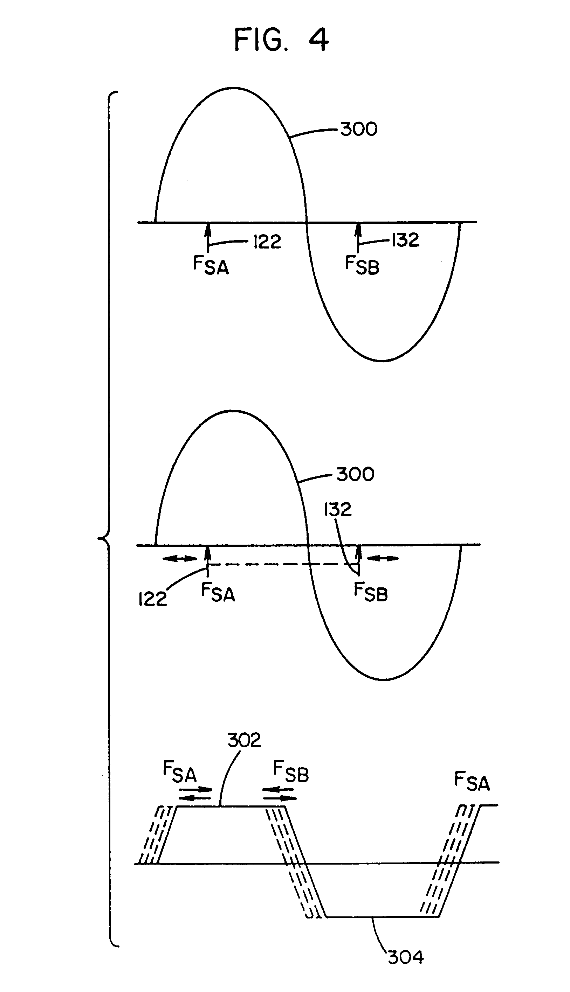

This changes the balance, i.e. the duration of the clean cycle. This balance adjustment feature is illustrated graphically in FIGURE 4. Curve 300 is the sine wave of the input voltage appearing on line 100 of FIGURE 3. The firing points F_{SA} and F_{SB}, which in the preferred embodiment are numbers, determine when the output current changes polarity. These firing points are the output signals in lines 122, 132 of FIGURE 3. When the voltage from potentiometer 46 is used to manually select the balance, the output on lines 122, 132 is moved in a fashion dependently of each other. This is done numerically. If one is moved a given number of electrical degrees (in digits) in one direction, the other is moved the same number of electrical degrees in the other direction. This is illustrated in the lower graph of FIGURE 4 showing the output current wave form wherein the clean cycle 302 is adjusted with respect to the weld cycle 304 by movement of the firing points F_{sA}, F_{SB}, as they occur in lines 122, 132. In essence, the desired balance selected by the position of the wiper on potentiometer 46 creates a signal that determines the length of duration of the clean cycle 302. In practice knob 44 is moved to a position (1-10) which gives a number corresponding to the voltage available from the potentiometer 46, which is the analog representation of the operation of the balance select knob 44. Since the power circuit 20 is controlled by a single phase, the weld or penetration portion of the output current 304 is adjusted inversely as the duration of clean portion 302 is adjusted. The objective of the invention is to control the duration of the clean cycle and the correlated adjustment of the weld portion is a fact when a fixed total welding cycle is created by the welder. Thus, in the preferred embodiment the balance control to select the clean duration also controls the relationship between the clean cycle and the weld or penetration cycle of the total output alternating current having a fixed period.

To implement the present invention, the circuit 40 shown in FIGURE 3 includes an arrangement for shifting from the manually selected balance of potentiometer 46 to the automatic control of the invention. By knob 44, the operator moves pointer 50 to indicia 54. This implements the software in an automatic balance control or device 70 as previously described. Device or program 70 gives automatic balance that can be used in any type of welder having an arrangement for selecting the firing signals to select wave balances. Such welders are shown in Risberg 4,038,515 wherein one firing point is moved individually. Then both firing points are adjusted by the current regulator to ultimately determine the duration of the clean cycle portion of the total cycle. Many other topographies for changing the firing circuit to adjust the balance can be used with the present invention. The present invention relates to the concept of allowing the firing circuit 40 to be operated with an automatic balance control arrangement 70 whereby the balance, or clean cycle duration, is automatically selected in accordance with a process parameter for the A.C. TIG welder 10, such as the selected output current level at selector switch or potentiometer 48. By adjusting pointer 50 to location or position 54 in FIGURES 2 and 3, the automatic balance control 70 is activated. The manually selected balance control is deactivated.

In accordance with the present invention there may be a combination of both manual selection of balance and implementation of the automatic balance control in the same subroutine or program of the microprocessor. In other words, knob or selector switch 44 selects the overall range of balance. Then automatic balance control 70 changes that particular selected balance to a specific amount of balance based upon the output current or other process parameter. This concept is part of the present invention; however, in the preferred embodiment of the invention, the manual selection is not implemented simultaneously with the automatic balance control.

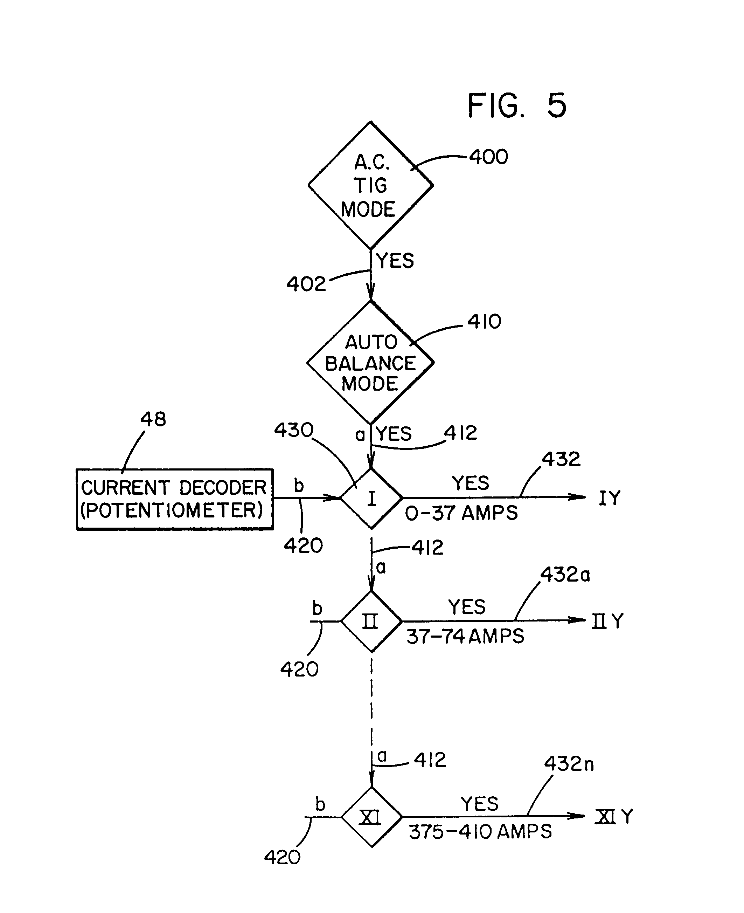

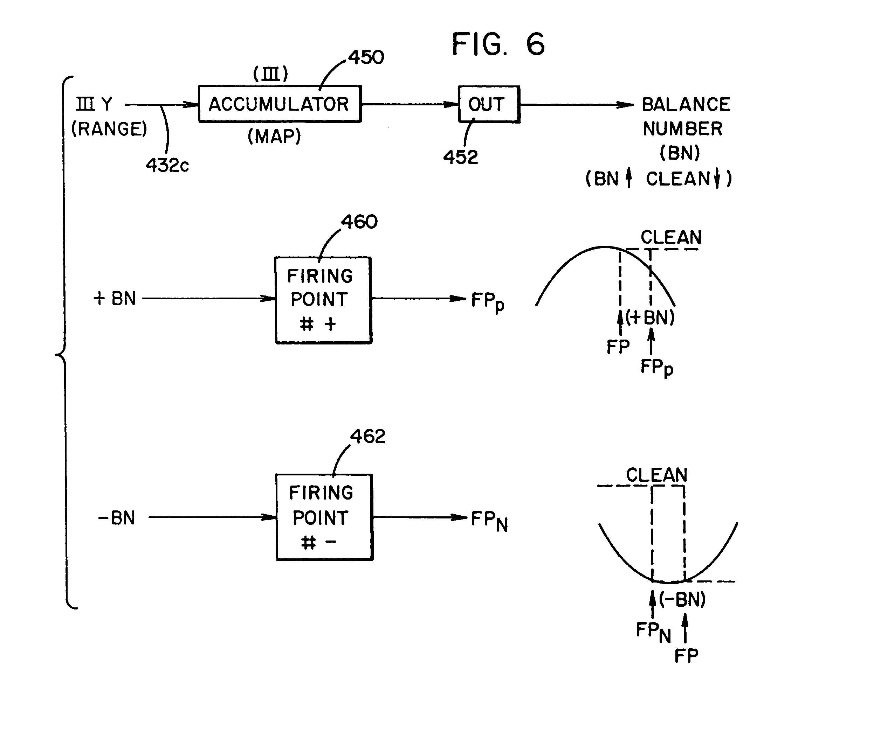

FIGURE 5 is a flow chart for using the present invention in the prior art microprocessor controlled TIG welder. This system is implemented by the program labeled "AUTOMATIC BALANCE" attached hereto. This program is not needed to understand the invention or its implementation which is within common programming knowledge. In accordance with this concept, balance selected by knob 44 in FIGURE 2 produces a number corresponding to position of pointer 50. This number, which is a digitized potentiometer, is added to, or subtracted from, the firing point number to produce the desired actual firing points. Thus, the balance number from software potentiometer 46 is subtracted from and added to the firing points determined by the remainder of the program to perform the function shown in FIGURE 3. Thus, the balance number controls the two firing points. The numbers from the software potentiometer are scaled to real time as controlled by the internal clock of the microprocessor. This same prior art system is employed to implement the present invention. The automatic balance program or device 70 is a program that creates a number of the type normally created by the software potentiometer 46. Then, as in the prior art, the balance number BN is added to or subtracted from the calculated firing points based upon the software implementation of the other functions of the circuit shown in FIGURE 3 to produce the desired firing positions of the SCRs with respect to the incoming line voltage half cycle. In other words, the automatic balance control software or device 70 selects a specific number BN corresponding to a number which would have been selected by movement of the knob 44 in the prior art arrangement for selecting the wave balance. This number is automatically selected to correspond to the desired balance for any given output current set by potentiometer 48, or its digitized counterpart. This concept of automatically generating a number by the setting of knob 44 is illustrated in FIGURE 5 wherein the flow chart of the present invention is schematically illustrated. Block 400 indicates when the welder is in the A.C. TIG welding mode. This creates an affirmative signal in line 402. If the knob 44 is set to indicia or location 54 in FIGURE 2 then program function step 410 places an affirmative signal in line 412. The software knows that the automatic balance has been selected by interrogating the logic on line 412. The logic on this line is a particular memory location or addressed bit in the software. The desired signal 74 from the position of current selection potentiometer 48 is converted by converter 72 into a digital number appearing in line 420. This line indicates the selected or requested current level for the output of the welder. The number in line 420 corresponds generally to a number scaled to match the number from potentiometer 48 when the welder is not operated in the automatic balance mode. This number is to be used directly as the signal in line 74. However, in the preferred embodiment, the number at line 420 is divided into ranges. When this range indicates a requested current of 0-37 amperes, program step 430 is implemented to create an affirmative signal in line 432. This is functionally equivalent to signal 74. This gives a signal in line 432 whenever the current is set at 0-37 amperes. In a like manner, an affirmative answer is provided in line 432a and up through line 432 according to the range of the current selected by potentiometer 48. The signal in line 432 or the other lines indicates a range which includes the current level of potentiometer 48. These signals are directed to an accumulator or map 450 as shown in FIGURE 6. The map or accumulator is a memory device in system 70. Memory device 450 outputs a given number according to the range selected by the potentiometer 48. This number is directed to the output latch 452 to produce a balance number BN. In the program as the balance number increases, the length of the clean cycle decreases. As shown by function block 460, number BN is then added to the positive firing point FPp determined by the current position and other functions shown in FIGURE 3 to produce a firing point FP shifted according to the balance number. In a like manner, as represented by function block 462 the program subtracts the number BN from the negative firing point FP_{N} to produce the desired firing point FP for the other half cycle. This adjusts the amount of clean cycle in the output current. The number BN selected for subtracting from and adding to the firing point calculations of the microprocessor is the same as the balance number which is selected by potentiometer 46 in the prior art. The scale of the numbers is the same. The present invention automatically selects these numbers according to the output current level. Attached hereto is the program or software listing of the program for implementing the automatic balance using the prior art program as set forth in the other attached program software listing. The particular arrangement for implementing the present invention is irrelevant and the programs are shown only for the purposes of illustrating the mode now being used to practice the invention. The programs are not needed to enable a person skilled in the art to practice the invention which can be performed by many programs and hardwired logic. Indeed, the invention is easily added to existing square wave TIG welders. The invention can be done by analog circuits or software implemented concepts as long as the balance is controlled automatically by the adjusted output current or other process parameter. As indicated previously, a manual adjustment can be made to provide a given range of balance with the automatic control used to vary the balance according to a predetermined relationship with the process parameter as the latter changes. This concept can be implemented either by discrete components or by software.

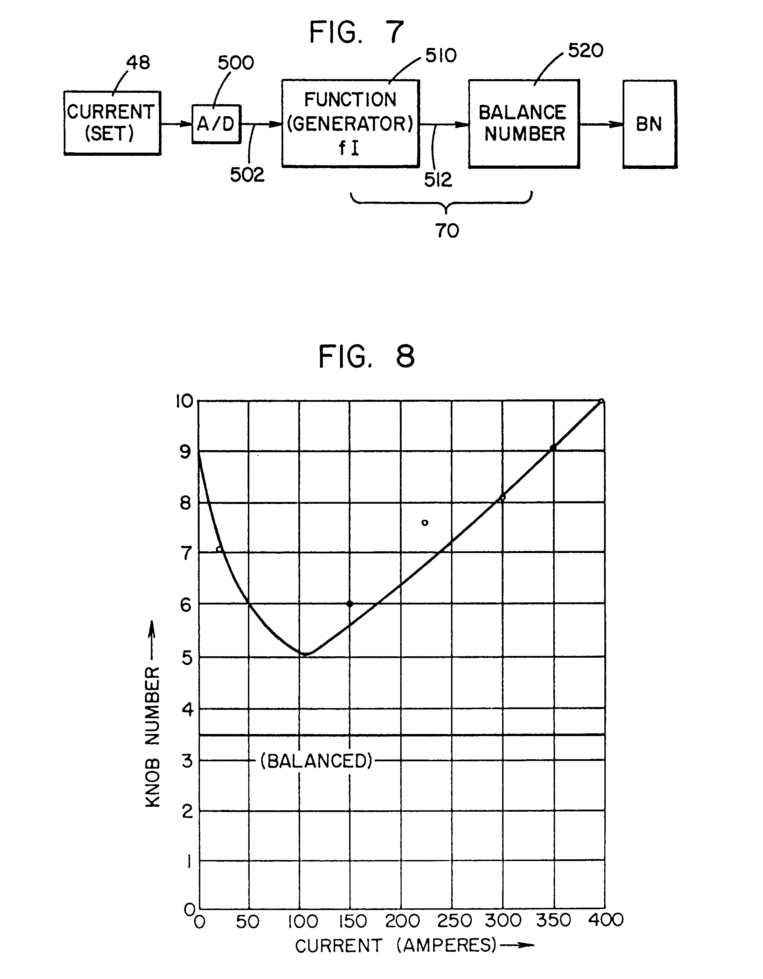

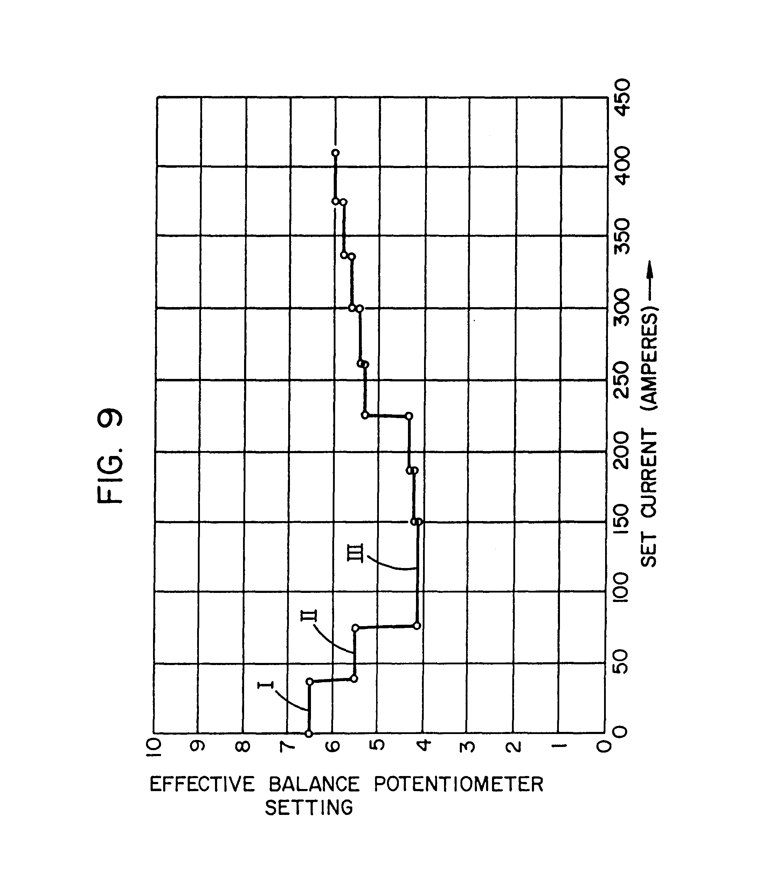

Referring now to FIGURE 7 a broad aspect of the present invention is illustrated wherein the current level is adjusted by potentiometer 48. The output of the potentiometer is converted by an analog to digital converter 500 to produce a number in line 502. This number is a digitized value of the set current level or the range of the set current as previously described. A function generator 510 creates an output number in line 512 corresponding to the number or range on line 502. This then selects the balance number BN from a map, memory, table or other predetermined relationship between the balance number and one or more process parameters stored in the microprocessor and indicated as table 520. The number on line 502 is an address and generator 510 outputs a number stored at the address. This operation produces by software the automatic balance attributed to device 70 in FIGURE 3. The map, table or memory employed in the preferred embodiment of the present invention is based upon the graph as shown in FIGURE 8. This graph is an empirically created relationship between the desired balance number BN of digitized potentiometer 46 and various output current settings at potentiometer 48 for aluminum welding. As can be seen, as the current setting increases to about 100 amperes, the clean duration increases. Thereafter, the clean duration decreases with increased current settings. The preferred software implementation of this graph is illustrated in FIGURE 9. This graph is employed in the preferred embodiment of the present invention. As the current shifts between 0 and 37 amperes, a first balance I is selected. This produces a balance number the same as a manual setting of knob 44 to a location between 7 and 6. As the current increases, another level of balance II is implemented. This allows implementation by a range as used in the preferred embodiment of the present invention and shown schematically in the flow chart of FIGURE 5. Other arrangements could be employed for comparing current to the desired number or balance level to be used for a particular current in implementing the software automatic balance concept of the present invention.

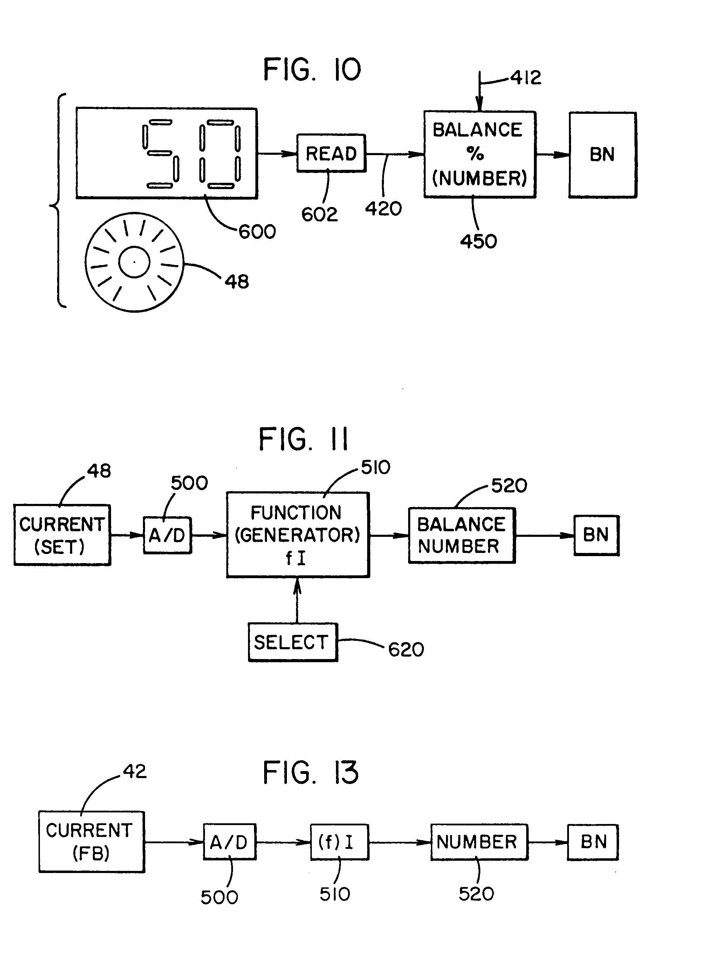

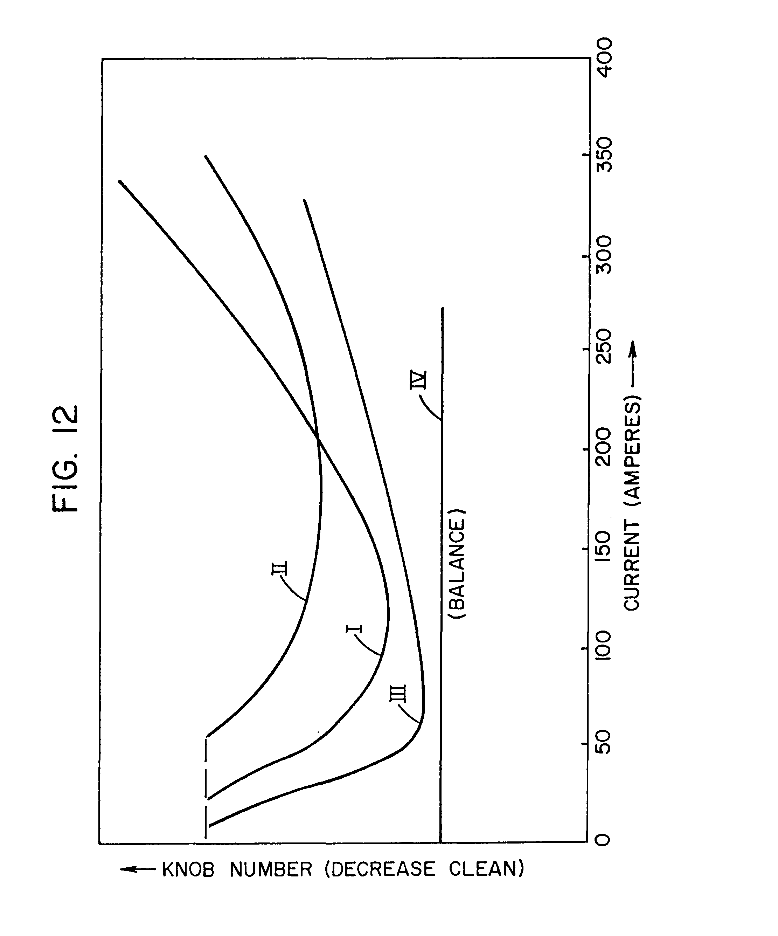

In FIGURE 10, the current control knob or potentiometer 48 is used to adjust the desired output welding current. The adjusted position is visually indicated in display 600 and the potentiometer is read by a converter 602 to produce a number or address in line 420, as discussed with respect to FIGURES 5 and 6. The other input to create the desired balance number BN from accumulator 450 is the signal 412 which indicates that an automatic balance mode has been selected. The modification of the present invention in FIGURE 10 merely shows that the adjusted position of the current can be visually displayed. Another modification of the invention is illustrated in FIGURE 11 which is essentially the same as FIGURE 7, except for a manual SELECT subroutine wherein a particular adjustment of welder 10 will select one of various stored relationships between the set current and the output balance number BN. This concept is illustrated schematically in the graph of FIGURE 12. The empirical relationships I, II, III and IV can be manually selected by an appropriate SELECT knob on welder 10. This knob 620 actuates a subroutine in the program of generator 510 in accordance with the selected one of several empirical relationships between balance and output current, such as relationships I through IV in FIGURE 12. The particular aspects of the empirical relationship are not part of the invention and can be determined by a welding engineer or other skilled person for any individual machine being operated in various processes or for several aluminum alloys. The invention is not the relationship itself used to automatically select the amount of balance, i.e. the time duration of the clean portion of the total welding cycle. The invention is the concept of modifying an A.C. TIG welder to create a system or method for automatically selecting the duration of the clean cycle or the balance of the welder in accordance with a detected or adjusted welding process parameter. FIGURES 11 and 12 indicate that that actual relationship can be manually selected from a group of stored relationships. This selection can be made in accordance with the type of process to be performed, the individual desires of the operator, the alloy being welded, the shielding gas and related variables. In other words, for a given application or aluminum alloy the operator would select the first position of a selector knob or switch 620 that selects the relationship I in FIGURE 12. For another application or alloy, the knob 620 would be manually shifted to select the relationship II. Thus, selector knob 620 changes the particular relationship in the modification of FIGURE 11.

FIGURE 13 is a further modification of the preferred embodiment of the present invention wherein the input to the converter 500 is the voltage from shunt 42 instead of the output voltage of potentiometer 48. The operation of the invention remains the same. In practice the potentiometers can create analog voltage signals or they can be read directly as numbers, i.e. digitized potentiometers.

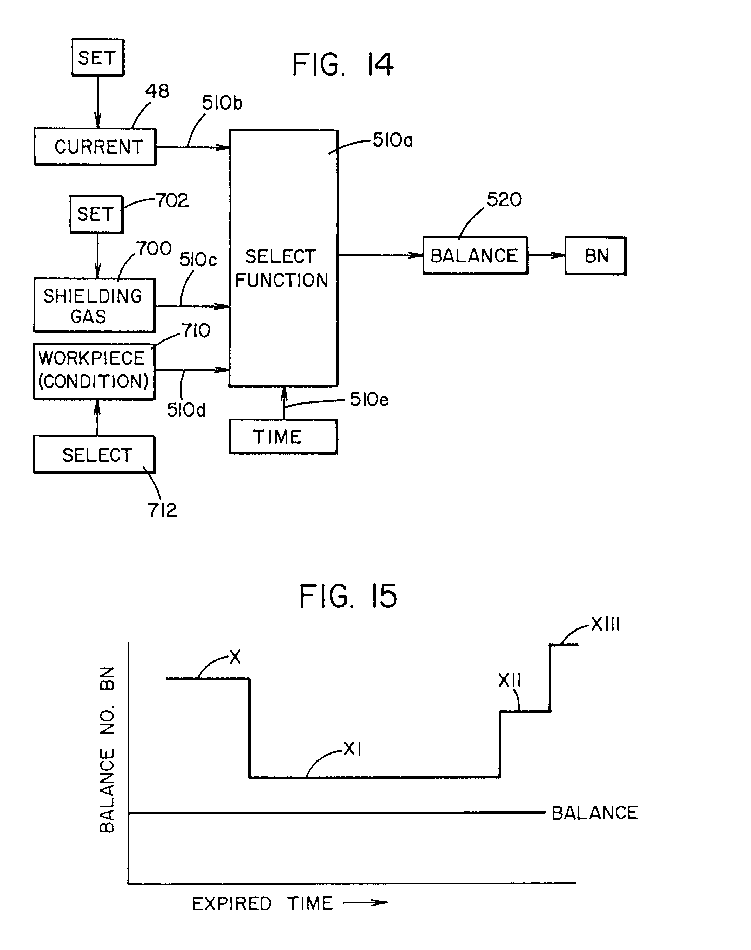

Referring now to FIGURES 14 and 15, still a further modification of the preferred embodiment is illustrated wherein a microprocessor program indicated to be a select function circuit 510a is controlled by one or more inputs 510b-510e. Each of these inputs is employed for the purpose of automatically selecting the balance number through an accumulator map, table, memory device or location, or other storage relationship device 520. As previously discussed, the output of potentiometer 48 controls input 510b of function generator or select circuit 510a. In accordance with another aspect of the invention, an encoder 700 can be manually set to a desired shielding gas by any appropriate mechanism 702. The gas used for the welding operation creates a digital number in line 510c. This number controls the relationship between the current and the balance number according to the selected gas. In a like manner, a workpiece selector 710 is adjusted manually by an operator through switch 712 to select the balance relationship for a specific workpiece to be welded or alternatively, for the condition of the workpiece, i.e. the state of oxidation. This manual selection creates an identification number in line 510d that selects the current/balance relationship. As so far described, the modification shown in FIGURE 14 allows selection of the balance number in accordance with any of several specific process parameters.

In accordance with another aspect of the invention, the input 510e can be a real time clock that changes during the welding cycles so that the balance number can be changed in accordance with the elapsed time during a given welding operation. The amount of balance or the duration of the current pulse in the A.C. output current changes during the welding operation as a function of time instead of current. This can be advantageous in start up and crater fill operation of aluminum welding process. As illustrated in FIGURE 15, as time advances the output number is shifted according to the relationships X-XII. Consequently, as time advances, the microprocessor changes the balance number BN for the welding operation. This feature is implemented in a microprocessor program by subroutine processing of elapsed time and then changing the balance number to correspond to one of the positions on the adjustable knob 44 shown in FIGURE 2 as a function of elapsed time.

Time and current cause a generation of a specific number as shown in FIGURE 15. Other parameters such as gas and workpiece select the particular relation between the number and a specific parameter, such as current. The present invention is implemented by any logic circuit or program that can select the balance of the A.C. output current according to the selected level of the output current.

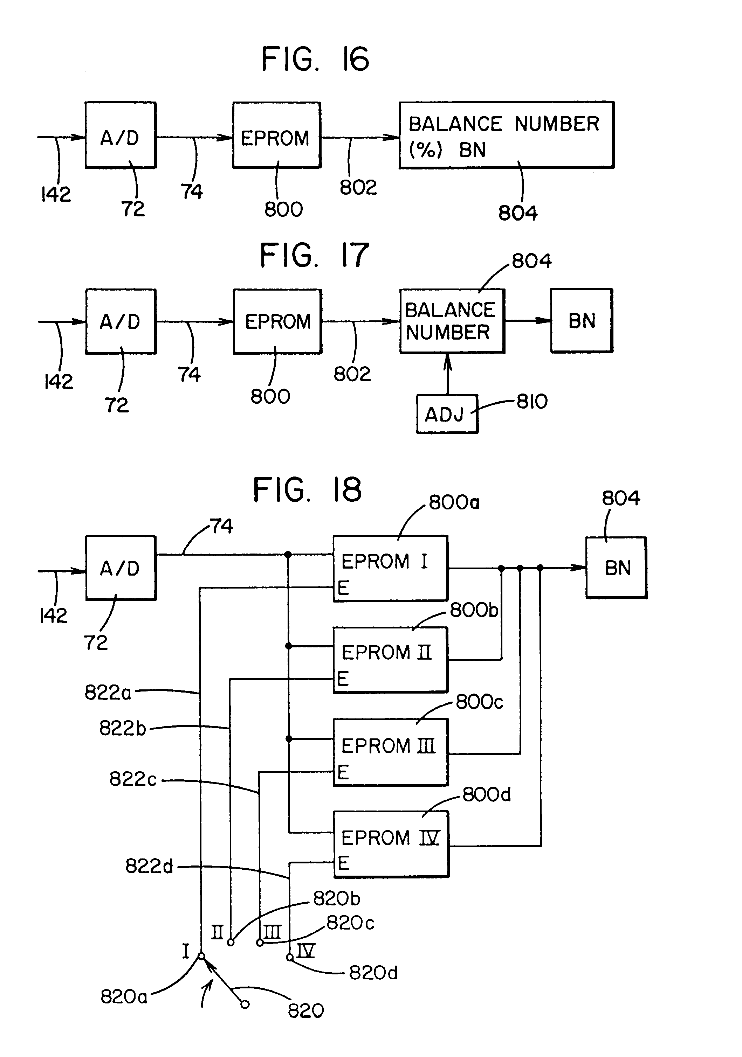

One specific embodiment of the invention is shown in FIGURE 16. The current setting from potentiometer 48 of FIGURE 3 is directed as a voltage on line 142 to converter 72. This produces a digital signal in line 74 which is the selected current level. EPROM 800 has the various balance numbers, or other balance indicative data, stored at specific, addressable locations. The digital data on line 74 is the address input to EPROM 800. When the input data is latched into the EPROM the proper balance number or data is outputted in line 802. This balance number is then used to calculate the firing points as already described. The EPROM has the relationship generally illustrated in FIGURE 9 or as illustrated in FIGURE 8. When the features of FIGURES 11 and 12 are to be used, the EPROM can store all selected relationships. Processing of the EPROM data to give the control balance number BN is shown as function block 804. To fine tune the balance number for operator preference, function block 804 can include a manual adjustment such as selector switch 810 in FIGURE 17. If the automatically selected balance number does not produce the exact weld desired by an operator, the modification of FIGURE 17 is used. Switch 810 can manually increment or decrement the automatically generated balance number.

In FIGURE 18, a plurality of EPROMs 800a-800d are used in this embodiment. Each of these EPROMs has a specific relationship between set current and the balance number BN. Selector switch 820 is manually movable between terminals 820a-820d corresponding to a particular aluminum alloy. The stored relationship at the addresses in the EPROMs is correlated with the specific aluminum alloys. By selecting a terminal 820a-820d, assigned to a given alloy, the logic on one of the lines 822a-822d, will enable one of the EPROMs 800a-800d containing the proper relationship between current and balance for the given alloy. The selected EPROM will transmit the proper balance data to block 804 through the lines 822a-822d of the enabled EPROM. The memory devices could be ROM of various types.

Attached hereto are two program listings as discussed in the present application. Version 81 is the prior art program for computing the firing angle in the prior art microprocessor controlled A.C. TIG welder. The balance control is indicated in the first program starting at statement C0564 and ending in D0575. As can be seen, the balance is first scaled to accommodate the rotary position of knob 44. This produces a balance number BN which is added during the positive half cycle and subtracted during the negative half cycle. In completing the firing angle or firing points the parameters are the power or current setting, the setting for the A.C. balance and the determination of the particular phase being processed at any given time. The subroutine calculates the firing angle and an off angle based upon the power setting. The firing angle and off angle are computed and stored in units which are .090. Consequently, 180 is represented by 2,000 units in the microprocessor program. The power setting is first checked for external boundaries as shown in FIGURE 3 and the power setting is then subtracted from the number of angle units in a half cycle to produce a preliminary firing angle. The firing angle is the number of units after zero crossing when the SCRs are fired. If the welder is in the A.C. mode, the phase of the incoming power is checked. If the input voltage is in the positive phase, the A.C. balance potentiometer is scaled as it relates to the knob 44 and is added to the firing angle. If the input voltage is in the negative phase, the balance number is subtracted from the firing angle. See FIGURE 6. The firing angle must be checked to be sure that is does not come before the minimum legal firing angle of 35 _{°} or 389 units as shown functionally in FIGURE 3. If the calculated angle is too small, the firing angle is set to the earliest firing angle stored in the program. If the firing angle is after the latest angle allowed which is 165 of 1856 units, the firing angle is set to the half cycle angle so that it will not fire. The angle to stop firing of the SCRs is also computed by this program. The SCRs are left conductive for 750 ms after they are fired or until the next zero crossing, whichever comes first. 750 ms represent 30 individual 25-ms interrupts. Because the next interrupt might occur at any time an extra interrupt is added to assure that a minimum of 750 ms will pass. Thus, a value of 31 is multiplied by the number of angle units for interrupt and this number is added to the firing angle to produce the off angle. If the off angle is greater than the number of angle units per half cycle, the off angle is limited to one half cycle. Since the SCRs must be shut off by the next zero crossing of the power cycle this will cause them to be energized for a duration less than 750 ms when fired close to the minimum legal angle. This is the general concept employed in the prior art microprocessor controlled A.C. TIG welder for setting the firing points based upon the adjusted balance determined by the manually selected position of knob 44. The second software listing attached hereto is Version 92 and includes the concept to compute the A.C. auto balance and to compute the firing angle based upon the automatic balance. This is a modification of the prior program Version 81 to accomplish the software implementation in the prior art unit to accomplish the present invention.

## Claims

1. A control system for an A.C. TIG welder operated in accordance with process parameters and having a welding current alternating between a first polarity defining a clean current portion and a second polarity defining a weld current portion, with successive clean and weld current portions constituting a current cycle and means for adjusting the duration of the clean portion of said welding current cycle, said control system comprising: means for storing a predetermined group of duration signals each indicative of a clean portion duration with each duration signal corresponding to a given value of a preselected one or more of said process parameters; sensing means for sensing the value of said preselected one or more of said process parameters; means for selecting the clean portion duration signal corresponding to said sensed value; and, means for adjusting said duration of said clean current portion of said current cycle to the duration indicated by said stored clean portion duration signal corresponding to said sensed value.

2. A system as defined in claim 1 including means for connecting said welder to a source of single phase voltage alternating through 360 electrical degrees and including a positive and negative half cycle.

3. A system as defined in claim 1 or 2 wherein said current cycle constitutes 360 electrical degrees.

4. A system as defined in claim 2 wherein the duration of said clean portion and the duration of said weld current portion equal 360 electrical degrees.

5. A system as defined in one of the claims 1, 3 or 4 including me s for making said clean current portion and said weld current portion substantially square wave current pulses.

6. A system as defined in claim 1 wherein said preselected one or more of said process parameters is the value of the welding current.

7. A system as defined in claim 1 including means for setting a desired value of welding current and said sensing means includes means for sensing the set desired welding current value.

8. A system as defined in claim 1 including means for manually changing said predetermined group of duration signals to a second group of duration signals.

9. A system as defined in anyone of the claims 1 to 3 or 6 including means for maintaining said current cycle at a fixed duration whereby said weld portion duration is inversely adjusted with respect to adjustment of said clean duration.

10. A system as defined in claim 1 including means for measuring the actual value of said welding current and said sensing means includes means for sensing said actual welding current value.

11. A system as defined in claim 1 wherein said preselected one or more of said process parameters is a parameter selected manually.

12. A method of controlling an A.C. TIG welder operated in accordance with process parameters and having a welding current alternating between a first polarity defining a clean current portion and a second polarity defining a weld current portion, with successive clean and weld current portions constituting a current cycle and means for adjusting the duration of the clean portion of said weld current cycle, said method comprising the steps of:
(a) storing a predetermined group of duration signals each indicative of a clean portion duration with each duration signal corresponding to a given value of a preselected one or more of said process parameters;
(b) sensing the value of said preselected one or more of said process parameters;
(c) selecting the clean portion duration signal corresponding to said sensed value; and,
(d) adjusting said duration of said clean current portion of said weld current cycle to the duration indicated by said stored clean portion duration signal corresponding to said sensed value.

13. A method as defined in claim 12 including the additional step of connecting said welder to a source of single phase voltage alternating through 360 electrical degrees and including a positive and negative half cycle.

14. A method as defined in claim 12 including the additional step of making said clean current portion and said weld current portion substantially square wave current pulses.

15. A method as defined in claim 12 including the additional steps of setting a desired value of welding current and wherein said sensing step includes the step of sensing the set desired welding current value.

16. A method as defined in claim 12 including the additional step of manually changing said predetermined group of duration signals to a second group of duration signals.

17. The method as defined in claim 12 including the additional step of maintaining said current cycle at a fixed duration whereby said weld current portion duration is inversely adjusted with respect to adjustment of said clean duration.

18. A method as defined in claim 12 including the additional step of measuring the actual value of said welding current and wherein said sensing step includes the step of sensing said actual welding current value.

19. A control system for an A.C. TIG welder having a welding current alternating between a first polarity defining a clean current portion and a second polarity defining a weld current portion, with successive clean and weld current portions constituting a current cycle and means for adjusting the duration of the clean portion of said current cycle, said control system comprising: means for storing a predetermined group of duration signals each indicative of a clean portion duration with each duration signal corresponding to a given value of said welding current; sensing means for sensing the value indicative of said welding current; means for selecting the clean portion duration signal corresponding to said sensed value of said welding current; and, means for adjusting said duration of said clean current portion of said current cycle to the duration indicated by said stored clean portion duration signal corresponding to said sensed value of said welding current.

20. A system as defined in claim 19 including means for setting the value of said welding current and wherein said sensing means includes means for sensing the set value of said welding current.

21. A system as defined in claim 19 including means for measuring said welding current and wherein said sensing means includes means for sensing the measured value of said welding current.

22. A method of controlling an A.C. TIG welder having a welding current alternating between a first polarity defining a clean current portion and a second polarity defining a weld current portion, with successive clean and weld current portions constituting a current cycle and means for adjusting the duration of the clean portion of said current cycle, said method comprising the steps of:
(a) storing a predetermined group of duration signals each indicative of a clean portion duration with each duration signal corresponding to a given value of said welding current;
(b) sensing the value indicative of said welding current;
(c) selecting the clean portion duration signal corresponding to said sensed value of said welding current; and,
(d) adjusting said duration of said clean current portion of said current cycle to the duration indicated by said stored clean portion duration signal corresponding to said sensed value of said welding current.

23. A method as defined in claim 22 including the further steps of setting the value of said welding current and wherein said sensing step includes sensing the set value of said welding current.

24. A method as defined in claim 22 including the further step of measuring said welding current and wherein said sensing step includes means for sensing the measured value of said welding current.

25. A method of operating an A.C. TIG welder having a generally square wave welding current having a level and alternating between a first polarity clean current portion and a second polarity weld current portion, said clean portion having a given time duration, said method comprising the steps of:
(a) creating a signal indicative of the level of said welding current;
(b) adjusting said time duration in accordance with said created signal whereby said clean portion duration is selected as a relationship of said welding current level.

26. A method as defined in claim 25 wherein said weld portion has a given time duration and including the step of maintaining the sum of said time duration of said clean portion and said weld portion at a fixed cycle duration.

27. The method as defined in claim 25 wherein said A.C. TIG welder includes a single phase voltage input, a power circuit having a first and second parallel path each controlled separately by a switching means selectively operated to pass current through one path during said clean portion and through said other path during said weld portion and a squaring choke common to both paths with flux in said choke being in the same electrical direction during each of said portions.

28. A method as defined in claim 25 wherein said A.C. TIG welder includes a three phase voltage input, a rectifier means for creating a D.C. current and an inverter power circuit having switching means for selectively passing a square wave current in said first polarity and then in said second polarity.

29. The method as defined in claims 27 or 28 wherein said A.C. TIG welder further includes software driven means for operating said switch means to control the duration of said clean portion.

30. The method as defined in claim 25 wherein said A.C. TIG welder includes a three phase voltage input, a rectifier means for creating a D.C. current and first switch means for passing a number of current pulses in said first polarity direction for said given duration to create said clean portion of said welding current, and switch means for passing a number of current pulses in said second polarity direction for a duration to create said weld portion.

31. The method as defined in claim 30 wherein said A.C. TIG welder further includes software driven means for operating said first means to control the duration of said clean portion.

32. A method as defined in claim 25 including the further step of controlling said relationship.

33. A method as defined in claim 32 wherein said controlling step includes the step of selecting a different duration for selected ranges of said current level.

34. A method as defined in claim 32 wherein said relationship is a selected curve and including the step of controlling said clean duration in accordance with said curve.

35. A method as defined in claim 34 including the additional steps of providing a number of curves and including the additional step of manually selecting one of said curves to control said clean duration.

36. An A.C. TIG welder including means for creating a generally square wave welding current having a level and alternating between a first polarity clean current portion and a second polarity weld current portion, said clean portion having a given time duration, said welder further comprising:
(a) means for creating a signal indicative of the level of said welding current; and,
(b) means for adjusting said time duration in accordance with said created signal whereby said clean portion duration is selected as a relationship of said welding current level.

37. An A.C. TIG Welder as defined in claim 36 wherein said weld portion has a given time duration and including means for maintaining the sum of said time duration of said clean portion and said weld portion at a fixed total time.

38. An A.C. TIG welder as defined in claim 36 wherein said A.C. TIG welder includes a single phase voltage input, a power circuit or source having a first and second parallel path, each controlled separately by a switching means selectively operated to pass current through one path during said clean portion and through said other path during said weld portion and a squaring choke common to both paths with flux in said choke being in the same electrical direction during each of said portions.

39. An A.C. TIG welder as defined in claim 38 wherein said A.C. TIG welder futher includes software driven means for operating said switch means to control the duration of said clean portion.

40. An A.C. TIG welder as defined in claim 36 wherein said A.C. TIG welder includes a three phase voltage input, a rectifier means for creating a D.C. current, and an inverter power circuit having switching means for selectively passing a square wave current in said first polarity and then in said second polarity and software driven means for operating said switch means to control the duration of said clean portion.

41. An A.C. TIG welder as defined in claim 36 wherein said A.C. TIG welder includes a three phase voltage input, a rectifier means for creating a D.C. current and first switch means for passing a number of current pulses in said first polarity direction for said given duration to create said clean portion of said welding current, and switch means for passing a number of current pulses in said second polarity direction for a duration to create said weld portion and software driven means for operating said first means to control said clean portion.

42. An A.C. TIG welder as defined in claim 36 including means for controlling said relationship.

43. An A.C. TIG welder as defined in claim 42 wherein said relationship controlling means includes means for selecting a different duration for selected ranges of said current level.

44. An A.C. TIG welder as defined in claim 42 wherein said relationship is a selected curve and including means controlling said clean duration in accordance with said curve.

45. An A.C. TIG welder as defined in claim 44 including means for providing a number of curves and means for manually selecting one of said curves to control said clean duration.

46. A method of operating an A.C. TIG welder during a given welding operation having a starting time and a finishing time, said welder having a generally square wave welding current with a level and alternating between a first polarity clean current portion and a second polarity weld current portion, said clean portion having a given time duration, said method comprising the steps of:
(a) creating a signal indicative of the elapsed time in said welding operation;
(b) adjusting said clean time duration in accordance with said created signal whereby said clean portion duration is selected as a relationship of the elapsed time of said welding operation.

47. A method of operating an A.C. TIG welder during a welding operation performed on a selected workpiece with a generally square wave welding current, said current having a level and alternating between a first polarity clean current portion and a second polarity weld current portion, said clean portion having a given time duration, said method comprising the steps of:
(a) creating a signal indicative of said selected workpiece;
(b) adjusting said time duration in accordance with said created signal whereby said clean portion duration is selected as a relationship of the workpiece selected for the welding operation.

48. A method of operating an A.C. TIG welder for performing one of several known welding operations with a generally square wave welding current having a level and alternating between a first polarity clean current portion and a second polarity weld current portion, said clean portion having a given time duration, said method comprising the steps of:
(a) creating a signal indicative of a selected one of said known welding operations; and,
(b) adjusting said time duration in accordance with said created signal whereby said clean portion duration is selected as a relationship of the welding operation selected for said welder.

49. An A.C. TIG welder including input means for receiving a single phase line voltage alternating between positive and negative half cycles, means for creating a generally square wave output current alternating between a first polarity clean current portion and a second polarity weld current portion and switching means for causing said welder to shift from one of said current polarities to the other of said current polarities upon the creation of a first switching signal at a first time during one of said half cycles and from said other of said current polarities to said one of said current polarities upon creation of a second switching signal at a second time during the half cycle opposite to said one half cycle, said welder comprising: signal selecting means for selecting a distinct signal indicative of the level of said output current and duration selecting means for selecting the duration of said clean current portion in accordance with the distinct signal selected by said signal selecting means.

50. A welder as defined in claim 49 wherein said duration selecting means includes means for creating a signal corresponding to a given time and means for changing said first time by algebraically adding said given time to said first time.

51. A welder as defined in claim 50 wherein said duration selecting means also includes means for changing said second time by algebraically subtracting said given time from said second time.

52. A welder as defined in claim 50 wherein said duration selecting includes means for creating a signal corresponding to a given time and means for changing said second time by algebraically subtracting said given time from said second time.

53. A welder as defined in one of the claims 49, 50 or 52 including manual means for changing the selected duration of said clean portion.

54. An A.C. TIG welder including means for creating a generally square wave output current alternating between a first polarity clean current portion and a second polarity weld current portion and switching means for causing said welder to shift from one of said current polarities to the other of said current polarities upon the creation of a first switching signal and from said other of said current polarities to said one of said current polarities upon creation of a second switching signal said welder comprising: signal selecting means for creating a distinct signal indicative of the level of said output current and duration selecting means for selecting the duration of said clean current portion in accordance with the distinct signal created by said signal creating means.

55. A welder as defined in claim 54 wherein said duration selecting means includes means for creating a signal corresponding to a given time and means for changing said first time by algebraically adding said given time to said first time.

56. A welder as defined in claim 54 wherein said duration selection means is a table in software with duration level indicia stored at addresses and said distinct signal is a binary number corresponding to an address of a stored duration level indicia.

57. A welder as defined in claim 56 wherein said table includes a first and second group for level indicia and means for selectively activating one of said groups.

58. A welder as defined in claim 54 wherein said duration selection means is a memory device with duration levels stored at addresses and said distinct signal is a binary number corresponding to an address of a stored duration.

59. A welder as defined in claim 54 including manual means for adjusting said selected duration.

60. A welder as defined in claim 54 wherein said duration selecting means includes a first and second memory means for storing a group of duration level indicia at specific addresses, said distinct signal is a binary number corresponding to an address of a stored duration level indicia in both said first and second memory means and means for selectively activating only one of said memory means.

61. A welder as defined in claim 58 or 60 wherein said memory means are PROMs.

62. A welder as defined in claim 58 or 60 wherein said memory means are a software implemented program.

63. A method of operating an A.C. TIG welder of the type including means for creating a generally square wave output current alternating between a first polarity clean current portion and a second polarity weld current portion and switching means for causing said welder to shift from one of said current polarities to the other of said current polarities upon the creation of a first switching signal and from said other of said current polarities to said one of said current polarities upon creation of a second switching signal, said method comprising the steps of:
(a) creating a distinct signal indicative of the level of said output current; and,
(b) selecting the duration of said clean current portion in accordance with the distinct signal created by said signal creating means.

64. The method as defined in claim 63 including the further step of:
(c) manually adjusting said selected duration.

65. The method as defined in claim 63 including the further steps of:
(c) manually selecting a functional relationship between said current and said clean duration; and,
(d) using said selected relationship for selecting a specific clean duration upon creation of a distinct signal indicative of a given current level.

66. An A.C. TIG welder including means for creating a generally square wave output current alternating between a first polarity clean current portion with an amplitude and duration parameter and a second polarity weld current portion and switching means for causing said welder to shift from one of said current polarities to the other of said current polarities upon the creation of a first switching signal at a first time and from said other of said current polarities to said one of said current polarities upon creation of a second switching signal at a second time said welder comprising: signal selecting means for selecting a distinct signal indicative of the level of said output current and means for selecting a parameter of said clean current portion in accordance with the distinct signal selected by said signal selecting means.

67. A welder as defined in claim 66 wherein said parameter is amplitude.

68. A welder as defined in claim 67 wherein said parameter is duration.
